# EUROPEAN PATENT SPECIFICATION

(11) **EP 2 434 511 B1**
(45) Date of publication and mention of the grant of the patent: **16.09.2015**
(21) Application number: 10179232.3
(22) Date of filing: 24.09.2010
(51) Int. Cl.: H01H 13/86, H01H 13/704, H01H 13/83, H04M 1/22

(54) **Backlighting apparatus for a keypad assembly**
Rückbeleuchtungsvorrichtung für eine Tastenanordnung
Appareil de rétroéclairage pour ensemble de clavier

(43) Date of publication of application: 28.03.2012
(73) Proprietor: BlackBerry Limited, Waterloo, ON N2K 0A7 (CA)
(72) Inventor: Chen, Chao, Waterloo Ontario N2L 3W8 (CA)
(74) Representative: Moore, Barry

(56) References cited:
- EP-A1- 2 031 618
- EP-A1- 2 063 297
- EP-A1- 2 141 716
- EP-A2- 1 901 321
- WO-A1-2007/102633
- WO-A1-2009/157218
- KR-A- 20060 120 514
- US-A1- 2007 057 031
- US-A1- 2007 242 048
- US-A1- 2009 173 607
- US-A1- 2009 283 394
- US-A1- 2010 200 381
- Anonymous: "Light Guide Film (LGF) metal dome array", Internet Article, 17 September 2010 (2010-09-17), Retrieved from the Internet: URL:http://web.archive.org/web/20100917114 914/http://www.metal-domes.com/product/dom e-array-LGF.htm [retrieved on 2012-01-13]

## Description

The field of this disclosure relates generally to keypads and keypad backlighting, with particular but by no means exclusive application to keypads of mobile communications devices.

It is often desirable to provide backlighting to the keys of a keypad assembly used in electronic devices such as mobile communications devices during darkened conditions. Light may be emitted from a light source located within the electronic device, and directed toward one or multiple keys illuminating such key(s).

EP-A-2141716 discloses a metal dome sheet to which a metal dome is attached. The metal dome elastically deforms with a pressing operation of a key top, thereby to have electrical conduction with a contact provided on a substrate, and restores from a deformed state when the pressing operation is released, thereby to release the conduction with the contact. US-A-2009173607 discloses a thin keymat module with a reflection structure including a circuit board with a plurality of elastic conductive elements, a mirror reflection sheet, a transparent elastic layer, a keymat layer and a light-emitting unit. The mirror reflection sheet is disposed on the circuit board, evenly corresponding to the elastic conductive elements. WO-A-2009157218 discloses a key module comprising a key top being depressed by an operator, a substrate on which a contact on the fixed side for making a signal generated is arranged, a dome arranged over the key top, a dome sheet covering the dome to be fixed on the substrate, an LED module arranged on the substrate, a light guide plate arranged on the key top -side dome sheet in order to make incident light from the LED module propagate therethrough and exit from an exit surface on the key top side. KR-A-20060120514 discloses a key-pad assembly is provided to minimize the number of light emitting diodes for construction of a key-pad by locating the light emitting diodes at one end of a waveguide. In a key-pad assembly, a key-pad has an elastic layerand at least one key buttonlocated on the elastic layer. A waveguide is located at the lower part of the elastic layer, and forms a reflecting pattern at a part corresponding to the key button. A switch substrate has at least one switch corresponding to the key button, and is located at the lower part of the waveguide. US-A-2007242048 discloses a keyboard module including a base, a transparent layer, a light source, and a reflective layer. The base includes a dome, and the transparent layer is adjacent to the base. The light source provides light to the transparent layer. The reflective layer covers the transparent layer and has a first opening and a second opening, wherein the first opening corresponds to the dome and the second opening corresponds to the light source. EP-A-2063297dislcoses a structure in which a light shielding part includes a slit provided between a first light guide body and a second light guide body, and an attenuation part which has unevenness formed by print and is additionally provided near end sides of the first light guide body and the second light guide body.

### GENERAL

In one broad aspect, there is provided a keypad assembly according to claim 1.

The dome overlay guide may be between the reflector layer and the key.

The operative coupling may comprise an adhesive. The keypad assembly may also comprise a deflection web configured to seat the key, wherein the deflection web is between the key and the dome overlay guide.

The light emitting source may comprise a side firing light emitting diode. The keypad assembly may include a plurality of keys, and a plurality of corresponding domes.

In another broad aspect, there may be provided a mobile device comprising the keypad assembly.

In a third broad aspect, there may be provided a keypad assembly. The keypad assembly may comprise a dome configured to operatively engage a switch sensor; a dome overlay guide operatively coupled to the dome; a key corresponding to the dome, and configured to operatively engage the dome; a deflection web configured to seat the key; and a side firing light emitting source configured to emit light. The dome overlay guide may comprise a light guide film and be configured to receive the emitted light, and direct the received light toward the key; and an actuator is adjacent a portion of an upper surface of the dome overlay guide.

The keypad assembly may also comprise a printed circuit board, wherein the reflector layer is positioned between the printed circuit board and the dome overlay guide. The dome overlay guide may be adhered to the reflector layer.

The dome overlay guide may comprise at least one cavity configured to emit the received light in a direction toward the key. The side firing light emitting source may comprise a light emitting diode.

In another broad aspect, there is provided method for providing backlighting for a keypad assembly according to claim 3.

Some embodiments of the system and methods described herein make reference to a mobile device. A mobile device may be a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities), for example. A mobile device may communicate with other devices through a network of transceiver stations.

### Brief Description of the Drawings

Embodiments are described in further detail below, by way of example only, with reference to the accompanying drawings, in which:
**FIG. 1** is a block diagram of a mobile device in one example implementation;
**FIG. 2** is a section view of a keypad assembly according to an embodiment of the present disclosure;
**FIG. 3** is an enlarged section view of selected elements of the keypad assembly of **FIG. 2**;
**FIG. 4** is an exploded perspective view of selected elements of the keypad assembly; and
**FIG. 5** is a logical flow diagram of a method for providing backlighting for a keypad assembly according to the present disclosure.

### Detailed Description

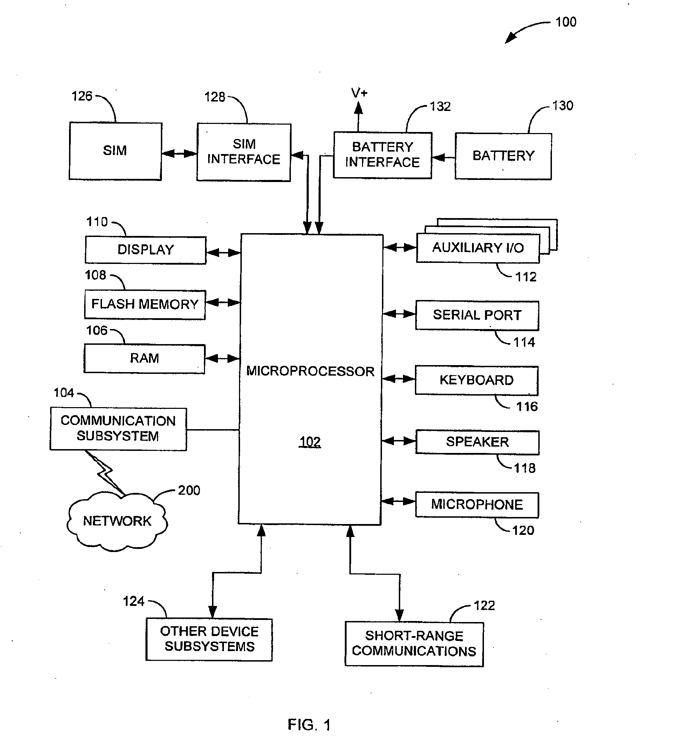

To aid the reader in understanding the structure of a mobile device, reference is made to **FIG. 1**.

**FIG. 1** **is a** block diagram of a mobile device in one example implementation, shown generally as **100**. Mobile device **100** comprises a number of components, the controlling component being microprocessor **102.** Microprocessor **102** controls the overall operation of mobile device **100.** Communication functions, including data and voice communications, may be performed through communication subsystem **104**. Communication subsystem **104** may be configured to receive messages from and send messages to a wireless network **200**. In one example implementation of mobile device **100,** communication subsystem **104** may be configured in accordance with the Global System for Mobile Communication (GSM) and General Packet Radio Services (GPRS) standards. The GSM/GPRS wireless network is used worldwide and it is expected that these standards may be supplemented or superseded eventually by Enhanced Data GSM Environment (EDGE) and Universal Mobile Telecommunications Service (UMTS), and Ultra Mobile Broadband (UMB), etc. New standards are still being defined, but it is believed that they will have similarities to the network behaviour described herein, and it will also be understood by persons skilled in the art that the embodiments of the present disclosure are intended to use any other suitable standards that are developed in the future. The wireless link connecting communication subsystem **104** with network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device **100** is a GSM/GPRS wireless network in one example implementation of mobile device 100, other wireless networks may also be associated with mobile device **100** in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex™ Radio Network and the DataTAC™ Radio Network. Examples of older voice-centric data networks include Personal Communication Systems (PCS) networks like GSM and Time Division Multiple Access (TDMA) systems. Other network communication technologies that may be employed include, for example, Integrated Digital Enhanced Network (iDEN™), Evolution-Data Optimized (EV-DO), and High Speed Packet Access (HSPA), etc.

Microprocessor **102** may also interact with additional subsystems such as a Random Access Memory (RAM) **106**, flash memory **108**, display **110,** auxiliary input/output (I/O) subsystem **112**, serial port **114**, keyboard **116**, speaker **118**, microphone **120**, short-range communications subsystem **122** and other device subsystems **124.**

Some of the subsystems of mobile device **100** perform communication-related functions, whereas other subsystems may provide "resident" or on-device functions. By way of example, display **110** and keyboard **116** may be used for both communication-related functions, such as entering a text message for transmission over network **200**, as well as device-resident functions such as a calculator or task list. Operating system software used by microprocessor **102** is typically stored in a persistent store such as flash memory **108**, which may alternatively be a read-only memory (ROM) or similar storage element (not shown). Those skilled in the art will appreciate that the operating system, specific device applications, or parts thereof, may be temporarily loaded into a volatile store such as RAM **106**.

Mobile device **100** may send and receive communication signals over network **200** after network registration or activation procedures have been completed. Network access may be associated with a subscriber or user of a mobile device **100**. To identify a subscriber, mobile device **100** may provide for a Subscriber Identity Module ("SIM") card **126** to be inserted in a SIM interface **128** in order to communicate with a network. SIM card 126 may be one example type of a conventional "smart card" used to identify a subscriber of mobile device **100** and to personalize the mobile device **100**, among other things. Without SIM card **126**, mobile device **100** may not be fully operational for communication with network **200**. By inserting SIM card **126** into SIM interface **128**, a subscriber may access all subscribed services. Services may include, without limitation: web browsing and messaging such as e-mail, voice mail, Short Message Service (SMS), and Multimedia Messaging Services (MMS). More advanced services may include, without limitation: point of sale, field service and sales force automation. SIM card **126** may include a processor and memory for storing information. Once SIM card **126** is inserted in SIM interface **128**, it may be coupled to microprocessor **102**. In order to identify the subscriber, SIM card **126** may contain some user parameters such as an International Mobile Subscriber Identity (IMSI). By using SIM card **126**, a subscriber may not necessarily be bound by any single physical mobile device. SIM card **126** may store additional subscriber information for a mobile device as well, including datebook (or calendar) information and recent call information.

Mobile device **100** may be a battery-powered device and may comprise a battery interface **132** for receiving one or more rechargeable batteries **130**. Battery interface **132** may be coupled to a regulator (not shown), which assists battery **130** in providing power V+ to mobile device **100**. Although current technology makes use of a battery, future technologies such as micro fuel cells may provide power to mobile device **100**. In some embodiments, mobile device **100** may be solar-powered.

Microprocessor **102**, in addition to its operating system functions, enables execution of software applications on mobile device **100**. A set of applications that control basic device operations, including data and voice communication applications, may be installed on mobile device **100** during its manufacture. Another application that may be loaded onto mobile device **100** is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network **200**. PIM data items may be seamlessly integrated, synchronized, and updated via wireless network **200** with the mobile device subscriber's corresponding data items stored and/or associated with a host computer system. This functionality may create a mirrored host computer on mobile device **100** with respect to such items. This can be particularly advantageous where the host computer system is the mobile device subscriber's office computer system.

Additional applications may also be loaded onto mobile device 100 through network **200**, auxiliary I/O subsystem **112**, serial port 114, short-range communications subsystem **122**, or any other suitable subsystem **124**. This flexibility in application installation increases the functionality of mobile device **100** and may provide enhanced on-device functions, communication-related functions, or both. For example, secure communication applications may enable electronic commerce functions and other such financial transactions to be performed using mobile device **100**.

Serial port **114** enables a subscriber to set preferences through an external device or software application and extends the capabilities of mobile device **100** by providing for information or software downloads to mobile device **100** other than through a wireless communication network. The alternate download path may, for example, be used to load an encryption key onto mobile device **100** through a direct and thus reliable and trusted connection to provide secure device communication.

Short-range communications subsystem **122** provides for communication between mobile device **100** and different systems or devices, without the use of network **200**. For example, subsystem **122** may include an infrared device and associated circuits and components for short-range communication. Examples of short range communication include standards developed by the Infrared Data Association (IrDA), Bluetooth^{®}, and the 802.11 family of standards (Wi-Fi^{®}) developed by IEEE.

In use, a received signal such as a text message, an e-mail message, or web page download is processed by communication subsystem **104** and input to microprocessor **102**. Microprocessor **102** then processes the received signal for output to display **110** or alternatively to auxiliary I/O subsystem **112**. A subscriber may also compose data items, such as e-mail messages, for example, using keyboard **116** in conjunction with display **110** and possibly auxiliary I/O subsystem **112**. Auxiliary subsystem **112** may include devices such as: a touch screen, mouse, track ball, optical trackpad infrared fingerprint detector, or a roller wheel with dynamic button pressing capability. Keyboard **116** may comprise an alphanumeric keyboard and/or telephone-type keypad, for example. A composed item may be transmitted over network **200** through communication subsystem **104.**

For voice communications, the overall operation of mobile device **100** may be substantially similar, except that the received signals may be processed and output to speaker **118**, and signals for transmission may be generated by microphone **120**. Alternative voice or audio I/O subsystems, such as a voice message recording subsystem, may also be implemented on mobile device **100**. Although voice or audio signal output is accomplished primarily through speaker **118**, display **110** may also be used to provide additional information such as the identity of a calling party, duration of a voice call, or other voice call related information.

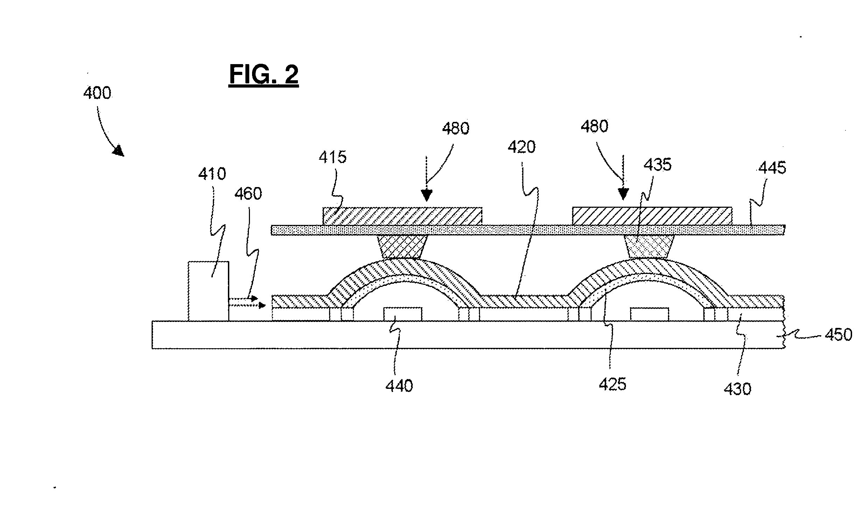

Referring now to **FIG. 2**, a keypad assembly according to an embodiment is shown generally as **400**. The keypad assembly **400** may be used within electronic devices, such as the mobile device **100** described above. For example, the keypad assembly **400** may comprise part of the keyboard **116**.

The keypad assembly 400 comprises a plurality of keys (or keycaps) **415** which may be arranged on a deflection web **445**. Each of the keys **415** is operatively coupled to at least one switch sensor **440**. The switch sensor **440** detects if the corresponding key has been pressed and if so it generates a corresponding signal on a printed circuit board **450**.

Separating a key **415** from its corresponding switch sensor **440** may be a corresponding dome **425** that is operatively coupled to the switch sensor **440**. The dome **425** may be made of metal or another suitable material (or a combination thereof) and may be configured to collapse and contact the switch sensor **440** when the corresponding key **415** is depressed in the key press direction **480** (i.e. the direction **480** in which a key **415** may be depressed). To this end, the key **415** may be configured to operatively engage the dome **425** via an actuator **435**. The actuator **435** may comprise part of and extend from the deflection web **445**. Specifically, the actuator **435** may be positioned between the key **415** and the dome **425** and it may transfer the key depression force, onto the dome **425**. Persons skilled in the art will understand that the domes **425** and the switch sensors **440** may operate like dome switches known in the art.

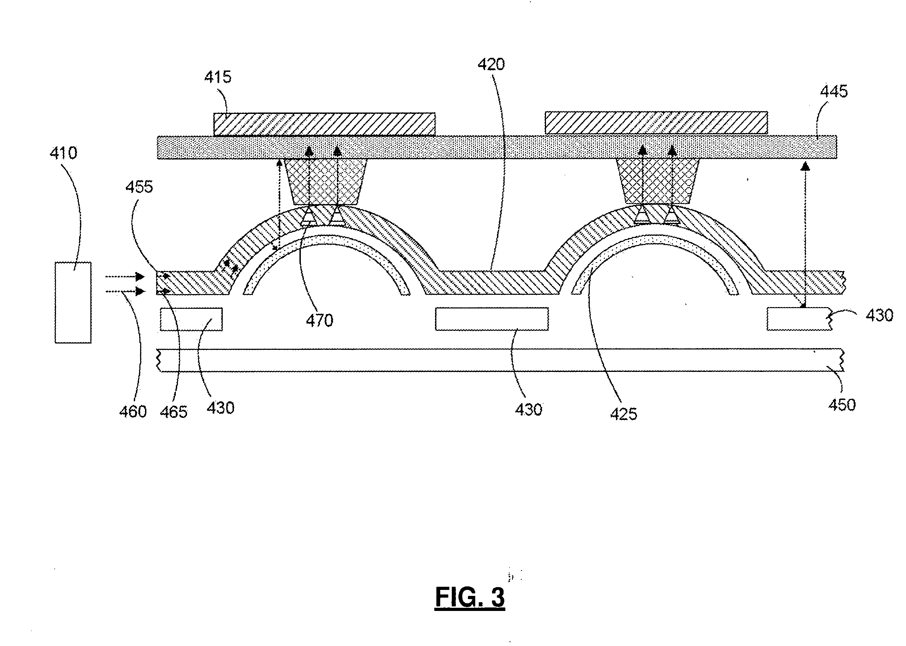

The keypad assembly **400** includes a light emitting source **410** configured to emit light for illuminating the keys **415**. To distribute the light emitted by the light emitting source **410** (referred to hereinafter as "emitted light" **460)** to the plurality of keys **415,** a dome overlay guide 420 is provided. The dome overlay guide **420** is configured to receive the emitted light **460** (referred to hereinafter as "received light" **465**) and direct the received light toward the keys (**FIG. 3**). To this end, the dome overlay guide **420** may comprise a light guide film.

The dome overlay guide **420** may also serve to keep the domes **425** aligned with their corresponding switch sensors **440**. To this end, the dome overlay guide **420** may overlay and be operatively coupled, by adhesive or otherwise, to the domes **425**.

Persons skilled in the art will appreciate that the keys **415** may be held in place in any suitable manner. For example, the keys **415** may be adhered (using an adhesive or otherwise) to the deflection web **445**. In some embodiments (not shown), one or both of the deflection web **445** and the actuators **435** may be configured to seat the keys **415**. In such a "seating" embodiment, the keys **415** and the one or both of the deflection web **445** and the actuators **435** may be provided with complementary male (such as a post) and female (such as a seat) features to permit the keys **415** to sit within the one or both of the deflection web **445** and the actuators **435**.

Referring now to **FIG. 3**, the illumination of the keys **415** by the light emitting source **410** is discussed in more detail. The light emitting source **410** is positioned adjacent and oriented towards an edge **455** of the dome overlay guide **420**, such that light **460** emitted from the light emitting source **410** is received by the dome overlay guide **420** through its edge **455**.

To redirect the received light **465** out of the dome overlay guide **420** toward the keys **415**, the dome overlay guide **420** may be provided with several micro features **470**. The micro features **470** may be provided at predetermined locations of the dome overlay guide **420** so as to align with the keys **415**. When the received light **465** traveling through the dome overlay guide **420** intersects with a micro feature **470**, a portion of the received light **465** is redirected toward the key **415** which is aligned with that micro feature **470**.

Persons skilled in the art will understand that the micro features **470** have been illustrated schematically and that any micro features suitable for redirecting received light **465** may be used. For example, the micro features **470** may comprise one or more cavities etched into a surface of the dome overlay guide **420**. These cavities may, for example, comprise v-shaped cuts, or white printing dots (or micro dots). In some variants, a two dimensional array of micro features **470** on the surface of the dome overlay guide 420 may be provided to help evenly redirect received light **465** toward the keys **415**.

Received light **465** traveling through the dome overlay guide **420** may escape (or leak) from the dome overlay guide **420** toward one or more of the printed circuit board **450** and the domes **425.** The escape of light from the dome overlay guide **420** may be most common wherever the dome overlay guide **420** is adhered to another surface using an adhesive. The escape of light caused by the use of an adhesive on the dome overlay guide **420** is sometimes referred to as wet out.

In some embodiments, to recapture at least a portion of the received light **465**, which escapes the dome overlay guide **420** toward the domes **425** and the printed circuit board **450**, the domes **425** and the printed circuit board **450** may be configured to be sufficiently reflective to reflect such escaped light back toward the keys **415**. For example, the domes **425** may be one of polished, provided with a reflective coating (for example, silver plating) or naturally reflective. Similarly, a reflector layer **430** may be provided between the dome overlay guide **420** and the printed circuit board **450**. The reflector layer **430** may be configured to reflect escaping light back toward the keys **415**.The side of the reflector layer **430**, which faces the dome overlay guide **420**, may be provided with a reflective coating or may be naturally reflective. In some embodiments, the reflector layer **430** may comprise a polymeric specular reflector film, such as for example Vikuiti™ Enhanced Specular Reflector film, as distributed by 3M Optical Systems.

The deflection web **445** and the actuators **435** may be made from a substantially translucent (or semitransparent) material. This may permit a relatively high portion of light emitted from the dome overlay guide **420** to pass through the deflection web **445** and the actuators **435** and reach the key(s) **415**.

The light emitting source **410** may comprise a side firing (or side emitting) light emitting diode (LED) as may be known in the art. Persons skilled in the art will understand that a side firing LED typically comprises a housing for the LED that is mountable at a base of the housing and an LED configured to emit light from a side wall-adjacent the base-of the housing. In contrast, the housing of a top firing LED, which is also mountable at its base, contains an LED configured to emit light from a top surface-opposite the base-of the housing.

Persons skilled in the art will appreciate that LEDs typically require there to be a certain amount of clearance (or space) between the surface of the LEDs, from which the light is emitted, and a light guide or other object in order for the LEDs to function efficiently. This space is typically referred to as the LED leading space gap. When using side firing LEDs (i.e. LEDs which emit light in a direction that is generally perpendicular to the key press direction **480**), as opposed to top firing LEDs (i.e. LEDs which emit light in a direction that is generally parallel to the key press direction **480**), as the light emitting source **410** within a keypad assembly **400**, any required leading space gap is lateral (i.e. generally perpendicular to the key press direction **480**) rather than vertical (i.e. generally parallel to the key press direction **480**). Consequently, the thickness of the keypad assembly **400** may be reduced by using side firing LEDs instead of top firing LEDs as the light emitting source **410** within a keypad assembly **400**.

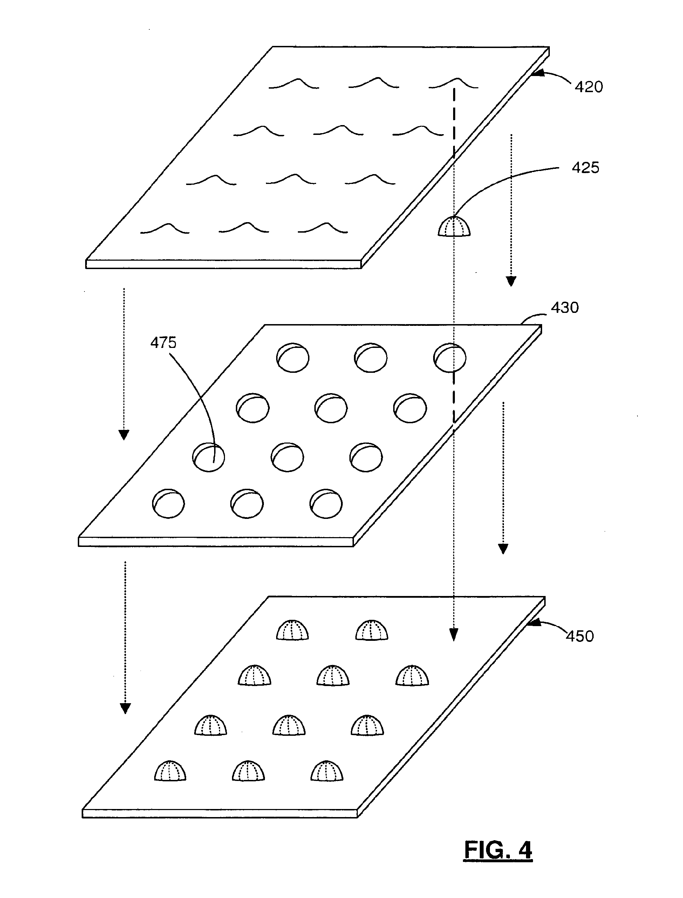

Referring now to **FIG**. **4**, the alignment and configuration of the reflector layer **430** is discussed in greater detail. **FIG. 4** shows an exploded view of the dome overlay guide **420**, the reflector layer **430**, and the printed circuit board **450** with the domes **425**. The reflector layer **430** is provided with apertures **475**, each of which corresponds to a dome **425**. Specifically, when the reflector layer **430** is coupled to the printed circuit board **450**, by adhesive or otherwise, the domes **425** each project out of their corresponding aperture **475**. Further, when the dome overlay guide **420** is coupled to the domes **425**, those areas of the dome overlay guide **420** that are not coupled to the domes **425** may be optionally adhered to the reflector layer **430**.

Persons having ordinary skill in the art will understand that the reflector layer **430** may comprise any number and arrangement of apertures **475**. Similarly the keypad assembly **400** may comprise any number and arrangement of keys **415**. For example, **FIG. 4** shows an example reflector layer **430** with twelve apertures **475** for use with a standard alphanumeric twelve-key keypad assembly (0-9, #, *). Those of ordinary skill the art will appreciate that other configurations of the reflector layer **430** and keys **415** may also exist to correspond to keypad assemblies with different numbers and/or arrangements of keys (e.g. a full QWERTY keypad assembly).

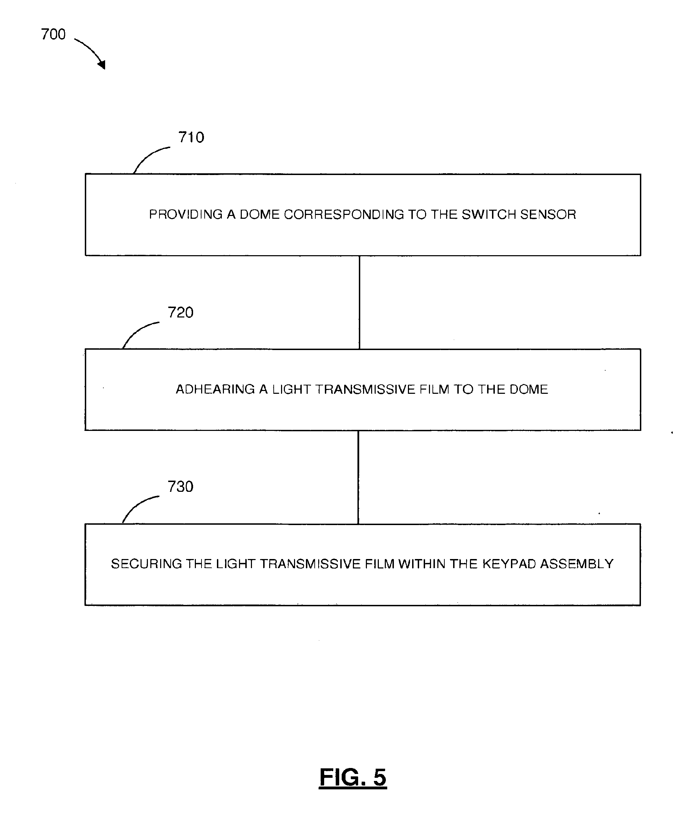

Referring now to the logical flow diagram of **FIG. 5**, a method (referred to generally as **700)** for providing backlighting for a keypad assembly **400** comprising a printed circuit board **450** having a switch sensor **440**, a key **415** corresponding to the switch sensor **440** and a light emitting source **410** will now be discussed. A dome **425** corresponding to the switch sensor **440**, is provided at Block **710**. The dome **425** is configured to operatively engage the switch sensor **440** when the key **415** corresponding to the switch sensor **440** is depressed.

At Block **720**, a dome overlay guide **420** is adhered or otherwise coupled to the dome **425.** The dome overlay guide **420** may comprise a light transmissive film such as a light guide film and be configured to receive light emitted (or emitted light **460**) from the light emitting source(s) **410** and direct light **460** toward the key(s) **415** of the keypad assembly **400**.

At Block **730**, the dome overlay guide **420** is secured within the keypad assembly. The dome overlay guide **420** may be secured to the printed circuit board **450** by adhering or otherwise coupling the dome overlay guide **420** to the reflector layer **430** which in turn may be adhered or otherwise coupled to the printed circuit board **450**.

In some instances, a keyboard assembly as described herein may be thinner than keyboard assemblies of alternate design, for example designs comprising separate (e.g. laminate) dome overlay guides and light guiding means.

The steps of a method in accordance with any of the embodiments described herein may not be required to be performed in any particular order, whether or not such steps are described in the claims or otherwise in numbered or lettered paragraphs.

The keypad assembly has been described with regard to a number of embodiments. However, it will be understood by persons skilled in the art that other variants and modifications may be made without departing from the scope of the disclosure as defined in the claims appended hereto.

## Claims

1. A keypad assembly (400) comprising:
a dome (425) configured to operatively engage a switch sensor (440) on a circuit board 450;
a dome overlay guide (420) adhered to the dome;
a key (415) corresponding to the dome, and configured to operatively engage the dome;
a light emitting source (410) configured to emit light;
wherein the dome overlay guide is configured to receive the emitted light (460) and direct the received light (465) toward the key;
a reflector layer (430) configured to reflect light escaping the dome overlay guide toward the key;
wherein the dome overlay guide comprises a light guide film; **characterized in that** the dome is reflective to reflect light escaping from the dome overlay guide toward the key and **in that** the reflector layer further comprises an aperture (475) corresponding to the dome.

2. The keypad assembly of claim 1, further comprising a deflection web (445) configured to seat the key.

3. The keypad assembly of claim 2, wherein the deflection web is between the key and the dome overlay guide.

4. The keypad assembly of anyone of claims 1 to 3, wherein the light emitting source is a side firing light emitting source (410).

5. The keypad assembly of any preceding claim, further comprising an actuator (435) adjacent to a portion of an upper surface of the dome overlay guide.

6. The keypad assembly of claim 1, wherein the dome projects out of the aperture.

7. The keypad assembly of claim 1 or claim 6, wherein the dome overlay guide is between the reflector layer and the key.

8. The keypad assembly of anyone of claims 1, 6 or 7, wherein the reflector layer is positioned between the printed circuit board and the dome overlay guide.

9. The keypad assembly of claim 8, wherein the dome overlay guide comprises at least one cavity (470) configured to emit the received light in a direction toward the key.

10. The keypad assembly of anyone of claims 1, 6 to 9, wherein the dome overlay guide is adhered to the reflector layer.

11. The keypad assembly of anyone of claims 1 to 10, wherein the dome is polished, provided with a reflective coating or naturally reflective.

12. A mobile device (100) comprising the keypad assembly of anyone of claims 1 to 11.

13. A method (700) of providing backlighting for a keypad assembly (400), the keypad assembly comprising a printed circuit board (450) having a switch sensor (440), a key (415) corresponding to the switch sensor, and a light emitting source (410) configured to emit light, the method comprising:
providing (710) a reflective dome (425) corresponding to the switch sensor;
adhering (720) a light guide film (420) to the dome; and
securing (730) the light guide film within the keypad assembly,
wherein the light guide film is configured to receive the emitted light (460), and wherein the dome is configured to operatively engage the switch sensor;
adhering a reflector layer (430) comprising an aperture (475) corresponding to the dome to the light guide film.

## Patentansprüche

1. Tastaturanordnung (400), die aufweist:
eine Kuppel (425), die konfiguriert ist zum operativen Betätigen eines Schaltsensors (440) auf einer Leiterplatte 450;
eine Kuppelauflageführung (420), die an der Kuppel anhaftet;
eine Taste (415) entsprechend der Kuppel und konfiguriert zum operativen Betätigen der Kuppel;
eine lichtemittierende Quelle (410), die konfiguriert ist zum Emittieren von Licht;
wobei die Kuppelauflageführung konfiguriert ist zum Aufnehmen des emittierten Lichts (460) und Lenken des aufgenommenen Lichts (465) in Richtung der Taste;
eine Reflektorschicht (430), die konfiguriert ist zum Reflektieren von Licht, das aus der Kuppelauflageführung austritt, in Richtung der Taste;
wobei die Kuppelauflageführung einen Lichtleiterfilm aufweist; **dadurch gekennzeichnet, dass** die Kuppel reflektierend ist, um Licht, das aus der Kuppelauflageführung austritt, in Richtung der Taste zu reflektieren, und
dadurch, dass die Reflektorschicht weiter eine Öffnung (475) entsprechend der Kuppel aufweist.

2. Die Tastaturanordnung gemäß Anspruch 1, die weiter ein Ablenkungsnetz (445) aufweist, das konfiguriert ist für einen Sitz der Taste.

3. Die Tastaturanordnung gemäß Anspruch 2, wobei das Ablenkungsnetz zwischen der Taste und der Kuppelauflageführung ist.

4. Die Tastaturanordnung gemäß einem der Ansprüche 1 bis 3, wobei die lichtemittierende Quelle eine zur Seite strahlende lichtemittierende Quelle (410) ist.

5. Die Tastaturanordnung gemäß einem vorhergehenden Anspruch, die weiter einen Aktuator (435) angrenzend an einen Teil einer oberen Oberfläche der Kuppelauflageführung aufweist.

6. Die Tastaturanordnung gemäß Anspruch 1, wobei die Kuppel aus der Öffnung herausragt.

7. Die Tastaturanordnung gemäß Anspruch 1 oder Anspruch 6, wobei die Kuppelauflageführung zwischen der Reflektorschicht und der Taste ist.

8. Die Tastaturanordnung gemäß einem der Ansprüche 1, 6 oder 7, wobei die Reflektorschicht zwischen der Leiterplatte und der Kuppelauflageführung positioniert ist.

9. Die Tastaturanordnung gemäß Anspruch 8, wobei die Kuppelauflageführung zumindest einen Hohlraum (470) aufweist, der konfiguriert ist zum Emittieren des aufgenommenen Lichts in eine Richtung hin zu der Taste.

10. Die Tastaturanordnung gemäß einem der Ansprüche 1, 6 bis 9, wobei die Kuppelauflageführung an der Reflektorschicht anhaftet.

11. Die Tastaturanordnung gemäß einem der Ansprüche 1 bis 10, wobei die Kuppel geglättet, mit einer reflektierenden Beschichtung versehen oder von Haus aus reflektierend ist.

12. Eine mobile Vorrichtung (100), die die Tastaturanordnung gemäß einem der Ansprüche 1 bis 11 aufweist.

13. Ein Verfahren (700) zum Vorsehen einer Hintergrundbeleuchtung für eine Tastaturanordnung (400), wobei die Tastaturanordnung eine Leiterplatte (450) mit einem Schaltsensor (440), eine Taste (415) entsprechend dem Schaltsensor und eine lichtemittierende Quelle (410) aufweist, die konfiguriert ist, Licht zu emittieren, wobei das Verfahren aufweist:
Vorsehen (710) einer reflektierenden Kuppel (425) entsprechend dem Schaltsensor;
Anhaften (720) eines Lichtleiterfilms (420) auf der Kuppel; und
Sichern (730) des Lichtleiterfilms in der Tastaturanordnung,
wobei der Lichtleiterfilm konfiguriert ist zum Aufnehmen des emittierten Lichts (460), und wobei die Kuppel konfiguriert ist zum operativen Betätigen des Schaltsensors;
Anhaften einer Reflektorschicht (430), die eine Öffnung (475) entsprechend der Kuppel aufweist, an den Lichtleiterfilm.

## Revendications

1. Ensemble de clavier (400) comprenant :
un dôme (425) configuré pour coopérer en service avec un capteur de commutateur (440) placé sur une carte de circuits (450) ;
un guide de recouvrement de dôme (420) adhérant au dôme :
une touche (415) correspondant au dôme et configurée pour coopérer en service avec le dôme ;
une source émettrice de lumière (410) configurée pour émettre de la lumière ;
dans lequel le guide de recouvrement de dôme est configuré pour recevoir la lumière émise (460) et pour rediriger la lumière reçue (465) vers la touche ;
une couche réfléchissante (430) configurée pour refléter vers la touche la lumière qui échappe au guide de recouvrement de dôme ;
dans lequel le guide de recouvrement de dôme comprend un film guide de lumière ;
**caractérisé en ce que** le dôme est réfléchissant afin de réfléchir vers la touche la lumière qui échappe au guide de recouvrement de dôme ; et
**en ce que** la couche réfléchissante comprend en outre une ouverture (475) correspondant au dôme.

2. Ensemble de clavier selon la revendication 1, comprenant en outre une bande de déflexion (445) configurée pour supporter la touche.

3. Ensemble de clavier selon la revendication 2, dans lequel la bande de déflexion se situe entre la touche et le guide de recouvrement de dôme.

4. Ensemble de clavier selon l'une quelconque des revendications 1 à 3, dans lequel la source émettrice de lumière est une source émettrice de lumière éclairant latéralement.

5. Ensemble de clavier selon l'une quelconque des revendications précédentes, comprenant en outre un actionneur (435) adjacent à une partie d'une surface supérieure du guide de recouvrement de dôme.

6. Ensemble de clavier selon la revendication 1, dans lequel le dôme fait saillie au travers de l'ouverture.

7. Ensemble de clavier selon la revendication 1 ou la revendication 6, dans lequel le guide de recouvrement de dôme se situe entre la couche réfléchissante et la touche.

8. Ensemble de clavier selon l'une quelconque des revendications 1, 6 et 7, dans lequel la couche réfléchissante est située entre la carte de circuits imprimés et le guide de recouvrement de dôme.

9. Ensemble de clavier selon la revendication 8, dans lequel le guide de recouvrement de dôme comprend au moins une cavité (470) configurée pour émettre la lumière reçue dans la direction de la touche.

10. Ensemble de clavier selon l'une quelconque des revendications 1 et 6 à 9, dans lequel le guide de recouvrement de dôme adhère à la couche réfléchissante.

11. Ensemble de clavier selon l'une quelconque des revendications 1 à 10, dans lequel le dôme est poli, doté d'un revêtement réfléchissant ou naturellement réfléchissant.

12. Dispositif mobile (100) comprenant l'ensemble de clavier selon l'une quelconque des revendications 1 à 11.

13. Procédé (700) de réalisation d'un rétroéclairage pour un ensemble de clavier (400), l'ensemble de clavier comprenant une carte de circuits imprimés (450) possédant un capteur de commutateur (440), une touche (415) correspondant au capteur de commutateur et une source émettrice de lumière (410) configurée pour émettre de la lumière, le procédé comprenant les étapes consistant à :
fournir (710) un dôme réfléchissant (425) correspondant au capteur de commutateur ;
coller (720) un film guide de lumière (420) sur le dôme ; et
immobiliser (730) le film guide de lumière à l'intérieur de l'ensemble de clavier ;
dans lequel le film guide de lumière est configuré pour recevoir la lumière émise (460) et dans lequel le dôme est configuré pour coopérer en service avec le capteur de commutateur ;
coller sur le film guide de lumière une couche réfléchissante (430) comprenant une ouverture (475) qui correspond au dôme.
